**Europäisches Patentamt**

**European Patent Office**

**Office européen des brevets**

(19)

(11) Veröffentlichungsnummer : **0 283 491 B1**

(12) **EUROPÄISCHE PATENTSCHRIFT**

(45) Veröffentlichungstag der Patentschrift :
**04.12.91 Patentblatt 91/49**

(51) Int. Cl.$^5$ : **B09B 1/00**

(21) Anmeldenummer : **87906084.6**

(22) Anmeldetag : **16.09.87**

(86) Internationale Anmeldenummer :
**PCT/EP87/00528**

(87) Internationale Veröffentlichungsnummer :
**WO 88/01913 24.03.88 Gazette 88/07**

(54) **BEHÄLTERSYSTEM ZUR LAGERUNG VON ABFÄLLEN.**

(30) Priorität : **18.09.86 DE 3631807**

(43) Veröffentlichungstag der Anmeldung :
**28.09.88 Patentblatt 88/39**

(45) Bekanntmachung des Hinweises auf die
Patenterteilung :
**04.12.91 Patentblatt 91/49**

(84) Benannte Vertragsstaaten :
**AT BE CH DE FR GB IT LI LU NL SE**

(56) Entgegenhaltungen :
**EP-A- 0 166 433**
**EP-A- 0 240 979**
**DE-A- 3 507 240**
**Müll und Abfall, Juni 1985, (Berlin, DE), L.**
**Fensch et al.: "Die Hochdeponie für Sonder-**
**müll, System Rollins - ein neues Konzept für**
**die Abfallbeseitigung", siehe Seiten 199-203**

(73) Patentinhaber : **DYCKERHOFF & WIDMANN**
**AG**
**Erdinger Landstrasse 1**
**W-8000 München-Riem (DE)**

(72) Erfinder : **BOMHARD, Helmut**
**H.-Wielandstrasse 2a**
**W-8130 Starnberg (DE)**
Erfinder : **FISCHER, Ernst**
**Feulnerweg 12**
**W-8000 München 83 (DE)**
Erfinder : **RUDAT, Dieter**
**Sternwartstrasse 17**
**W-8000 München 80 (DE)**

(74) Vertreter : **Lehn, Werner, Dipl.-Ing. et al**
**Hoffmann, Eitle & Partner Patentanwälte**
**Arabellastrasse 4**
**W-8000 München 81 (DE)**

## Beschreibung

### Technisches Gebiet der Erfindung

Die Erfindung bezieht sich auf das Erstellen und langfristige Betreiben von Abfall-Deponien, insbesondere auf ein Behältersystem für diesen Zweck

### Erörterung des Standes der Technik

Bekannte,Konzepte von Behältern zur Lagerung von Abfällen können wie folgt charakterisiert werden:

1. Auf einer konventionellen Basisabdichtung, wie sie bei Erddeponien zur Ausführung kommt, werden einzelne oder mehrere Stahlbetonbehälter mit Kreis-, Sechseck- oder Rechteckgrundriß aufgestellt. Sie haben i.a. einschalige Stahlbetonwände und erhalten eine Wetterschutzabdeckung zur Vermeidung des Zutritts von Niederschlagswasser. Auch die Anbringung von ein- oder mehrlagigen Dichtungsschichten mit eventuell dazwischengeschalteten Kontrollebenen auf diesen Betonwänden und auf der mineralischen oder massiven Bauwerkssohle wird vorgesehen.

Diese Arten von Abfallagern haben einige wesentliche Nachteile:

a) Eine Vorbehandlung, Verfestigung und in manchen Fällen sogar Trocknung sind Voraussetzung für die Ablagerung der Abfälle.

b) Eine Kontrolle der Dichtheit des Behälters erfolgt weitestgehend über sogenannte Leckmeldeschichten. Solche automatisierten Kontrollen bergen die Gefahr des Versagens während der Lebensdauer des Lagers in sich. Bestenfalls die Außenseiten der Außenwände der Behälter sind einer unbegrenzt wiederholbaren visuellen Kontrolle zugänglich.

c) Auch eine mehrschichtige Ausbildung der Dichtungssysteme schränkt den unter b) geschilderten Mangel nicht ein. Sie bietet allenfalls eine zeitliche Verzögerung des Versagens der Dichtung, da bis heute aufgrund der stofflichen Beschaffenheit der Abfälle keine Materialien für die Umschließung von Abfällen existieren, die unbegrenzt resistent gegen die verschiedenartigen chemischen und/oder biologischen Angriffe sind.

d) Selbst wenn man annimmt, daß die Leckagemeldung zum Zeitpunkt des Schadens noch funktioniert, kann eine kontrollierbare Behebung des Schadens bei gefülltem Behälter nicht erfolgen. Ein ganz- oder teilweises Entleeren des Abfallagers zum Zweck der Reparatur führt aufgrund der i.a. undefinierbaren Zusammensetzung des Abfalls zu neuen Lagerungs- und Umweltproblemen.

e) Die einzige bei gefülltem Lager angebotene Reparaturmöglichkeit ist das nachträgliche Verpressen des leckgewordenen Bereiches, indem die Leckmeldeschicht in einem bestimmten Bereich ausgepreßt wird. Abgesehen von der offenen Frage des Materials für dieses Verpressen ist der Vorgang an sich mit einer Reihe von Unwägbarkeiten behaftet. Die Kontrolle darüber, ob der gesamte Raum zwischen einer beschädigten und einer hoffentlich noch intakten Sperrschicht ausgepreßt wurde, ist nicht gezielt möglich. Dadurch, daß mindestens eine der angrenzenden Dichthäute ein Leck hat, tritt eingepreßtes Material in nicht meßbaren Mengen in Nachbarbereiche ein, die gar nicht verpreßt weren sollen. Da das Verpressen von dünnen Schichten wirkungsvoll nur unter hohen Drücken erfolgen kann, besteht die Gefahr, daß zusätzliche Schäden an den. Schichtgrenzen auftreten. Weiterhin ist es grundsätzlich fraglich, ob die bei Errichtung der Anlage installierten Verpreßröhrchen oder -schläuche zum Zeitpunkt des Schadenseintritts noch funktionstüchtig sind. Schließlich muß auch die dichtende Wirkung des eingepreßten Materials bezweifelt werden, da an den allgemein aus Polyäthylen oder dgl. bestehenden Dichthäuten, die die Leckmeldeschicht umschließen, andere Materialien aufgrund der antiadhäsiven Eigenschaften dieser Kunststoffe nicht haften. Somit kann zwischen der Dichthaut und dem eingepreßten Material die notwendige Verbundwirkung nicht erzielt werden. Dadurch besteht die Gefahr der Um- oder Hinterläufigkeit dieser eingepreßeten Schicht.

2. Andere Lagersysteme für Abfälle haben in Abwandlung oder Ergänzung der unter 1. geschilderten zusätzlich eine begehbare Sohle, die i.a. aus einer vielfach gestützten Stahlbetonplatte besteht und die zur Abfallseite hin wiederum mit einer oder mehreren Dichtungslagen mit u.U. zwischengeschalteten Leckmeldeschichten belegt ist. Hier ist, wie unter 1 b) geschildert, eine visuelle Kontrolle zwar auf der vom Abfall abgewandten Seite der Sohle möglich. Für eine Reparatur des Lecks in der Dichtung bei verbleibender tragender Sohle gelten die gleichen Vorbehalte wie unter. 1 b)-e) beschrieben.

3. Nach einer besonderen Ausführungsform einer begehbaren Sohle lt. 2. wird diese aus einer Vielzahl von statisch bestimmt gelagerten und durch Fugen getrennten Tragelementen gebildet, die wiederum zur Abfallseite hin mit ein- oder mehrlagigen Dichtungsschichten belegt sind. Die Lokalisierung eines Schadens auf ein betroffenes Element ist bei dieser Konstruktion nicht möglich. Erst wenn der tragende Teil der Sohle sichtbare Beeinträchtigungen aufweist, wird ein Schaden an der Dichtung offenbar, ohne daß seine genaue rage damit schlüssig fixiert wäre.

Größere Reparaturen an den Dichtungsschichten bedingen grundsätzlich den Abbruch einzelner Tragelemente. Das kann nur erfolgen, wenn der darüber befindliche Abfall in irgendeiner Weise so stabiliert wird, daß er beim Abbruch nicht nachstürzt. Das ist technisch wohl möglich. Dennoch verbleiben die Dichtungsschichten am eigentlichen Einbauort. So müße z.B. zur Reparatur der abfallseitigen Dichtung auch die darunterbefindliche mitentfernt werden, obwohl sie möglicherweise keinen Schaden hat. Die Reparatur der Dichtungen, die dabei an ihrem Untergrund wie Abfall, Kies oder anderen Fremdstoffen direkt anliegen, dürfte zumindestens technische Schwierigkeiten bereiten; d.h., daß an eine derartige Reparatur nur begrenzte Qualitätsansprüche gestellt werden können.

4. Auf dem Materialsektor für Auskleidungen von Deponien sind verschiedene Arten von Kunststoffen und/oder mineralischen Dichtungen in Anwendung bzw. werden auf ihre Tauglichkeit untersucht. Während sich bei präziser Definition der angreifenden Stoffe an die umschließende Dichtung wohl immer ein geeignetes Material finden läßt, liegen die Dinge beim Abfall wesentlich komplizierter. Da einerseits eine stoffliche Trennung der Abfälle zumindestens zur Zeit technisch nicht durchführbar ist, andererseits aber auch kein Material existiert, das gegen alle bekannten Angriffe aus dem Gemisch Abfall auf Dauer beständig ist, geschweige denn gegen sich zukünftig bildende, aber heute noch unbekannte Stoffe, kann das Problem der Lagerung von nicht vorbehandelten Abfällen alleine vom Material her nicht gelöst werden.

5. Bei der Abfallentsorgung sind nach dem heutigen Kenntnisstand drei Entsorgungskonzepte vorstellbar.

a) Der Abfall wird durch eine Vorbehandlung (z.B. chemisch, physikalisch, thermisch oder biologisch) so aufbereitet, daß seine Rückstände keiner weiteren Behandlung mehr bedürfen.

b) Der Abfall wird durch eine bestimmte Art der Vorbehandlung bei sehr hohen Temperaturen immobilisiert, d.h. die mineralisierten und trockenen Rückstände sind bei Aufrechterhaltung ihrer Konsistenz nicht aggressiv.

c) Der Abfall kann weder gezielt stofflich getrennt noch ausreichend vorbehandelt werden.

Zur sicheren Ablagerung der Abfallreststoffe nach diesen drei Konzepten ergeben sich im Hinblick auf die Vermeidung jeglicher Umweltgefährdung drei Arten von Abfallagern.

aa) Abfallager zum Konzept a)

Dieses Lager bringt keine Probleme, weil es einerseits keine sicherheitstechnischen Ansprüche stellt, andererseits aber bisher keine derartige Behandlungstechnik existiert.

Die Verbrennung erfüllt keineswegs die Ansprüche laut Konzept a), da die Erfahrung der letzten Jahre gezeigt hat, daß auch bei der Lagerung der Schlacke und der Rückstände aus der Rauchgasreinigung sehr wohl sicherheitstechnische Risiken bestehen.

bb) Abfallager zum Konzept b)

Die thermische Vorbehandlung der Abfälle in der Art, daß alle organischen Bestandteile verbrannt und die Rückstände mineralisiert, trocken und damit immobilisert sind, existiert zur Zeit noch nicht. Da aber derartige Verbrennungstechniken in der Enwicklung sind, scheint eine Realisierung in naher Zukunft denkbar zu sein. Das demgemäße Abfallager muß die Aufrechterhaltung der Immobilität des Verbrennungsrückstands gewährleisten. Das bedeutet Trockenhaltung des Abfalls und die Möglichkeit der jederzeit wiederholbaren Kontrolle und Reparatur der dies ermöglichenden Bauteile sowie ebenfalls die Rückholbarkeit der Abfälle.

cc) Abfallager zum Konzept c)

Der nach diesem Konzept nicht vorbehandelte Abfall, dem lediglich soweit möglich seine wiederverwertbaren Bestandteile (Recycling) durch Sortieren entnommen wurden, stellt ganz überwiegend die heutige Realität dar. Die Kapazitäten der bestehenden Verbrennungsanlagen reichen bei weitem nicht zur Behandlung der anfallenden Abfallmengen aus. Zudem müssen auch die Verbrennungs- und Rauchgasrückstände der bestehenden Anlagen sicher gelagert werden, da sie umweltschädliche Bestandteile enthalten.

Das Abfallager für diesen nicht vorbehandelten Abfall muß aus umwelt- und sicherheitstechnischer Sicht den Mindestanforderungen der

– laufenden Kontrollierbarkeit
– der jederzeit wiederholbaren Reparierbarkeit
– der u.U. mehrfachen Erneuerbarkeit und
– der Rückholbarkeit der Abfälle genügen.

Aus der EP-A-166 433 ist eine Vorrichtung zur Fassung von Sickerwasser aus Deponien bekannt. Die eigentliche Deponie ist durch einen flächigen Dichtkörper unterfangen, der durch eine Plattform dargestellt ist, die wiederum durch parallel geführte Tunnel gebildet ist. Der Dichtkörper wird seitlich von einer Dichtwand umgeben. Unter dem Dichtkörper ist ein Kontrollraum vorhanden. Eine innere Umschliebung für den Abfall und ein äußerer Mantel als Schutzbehältnis sind nicht vorgesehen.

Es sind auch Hochdeponien für Sondermüll aus des gattungsbildenden Zeitschrift "Müll und Abfall" 6/85, Seiten 199 bis 203 bekannt, die einen Doppelwand-Behälter umfassen.

Auch in der einen nicht vorveröffentlichten Stand der Technik darstellenden EP-A-240979 ist ein Doppelwand-Behälter offenbart, d.h. ein System mit einer inneren Umschließung für den Abfall und einem äußeren Mantel. Zwischen diesen ist ein Kontroll- und Arbeitsraum vorgesehen. Die innere Umschließung bzw. innere Wand ist aus Einzelelementen aufgebaut, die durch Stützelemente gegen den äußeren Mantel bzw. die äußere Wand abgestützt sind. Die Stützelemente sind sämtlich beweglich ausgebildet, und sie werden bereits bei der Erstellung des Behältersystems eingebaut. Im Reparaturfall kann mit ihnen das betroffene Element der inneren Wand so bewegt werden, daß dieses repariert oder erneuert werden kann. Die Stützelemente bestehen aus hydraulischen, pneumatischen oder mechanischen Betätigungselementen, die nur im Bedarfsfall betätigt werden, so daß sie über lange Zeiträume eingebaut sein können, ohne daß sie betätigt werden. Dadurch besteht die Gefahr, daß sie im Bedarfsfall nicht mehr funktionieren. Sie müssen dann entweder repariert oder durch neue ersetzt werden, was zusätzlich zu den hohen Anfangsinvestitionen weitere Kosten verursacht.

Aufgabe der Erfindung ist es, ein System zur Lagerung von umweltgefährdenden, nicht wirkungsbezogen differenzierbaren Abfällen, die das System angreifen und zerstören können, derart auszuführen, daß Abfall der angesprochenen Art ohne Belastung oder gar Gefährdung der Umwelt über lange Zeit mit technisch machbaren und wirtschaftlich vertretbaren Mitteln gelagert werden kann.

Die Erfindung betrifft demgemäß ein System zur Lagerung von umweltgefährdenden, nicht wirkungsbezogen differenzierbaren Abfällen, die das System angreifen und zerstören können, bestehend aus einer inneren Umschließung für den Abfall und einem äußeren Mantel als Schutzbehältnis, dadurch gekennzeichnet, daß zwischen äußerem Mantel und innerer Umschließung ein Luftraum als Kontroll- und Arbeitsraum ausgebildet ist, die innere Umschließung im Boden- und Wandbereich aus Elementen besteht, die bevorzugt schmal und langgestreckt sind, daß diese Elemente gegen den äußeren Mantel mit Stützelementen abgestützt sind, und daß die Stützelemente gegen hydraulische oder mechanische Stützelemente austauschbar sind, mit deren Hilfe die Elemente einzeln, jedes für sich, in den Kontroll- und Arbeitsraum abgesenkt bzw. gezogen und dort repariert oder erneuert werden können.

Bei dem erfindungsgemäßen System sind die eingebauten Stützelemente statische Konstruktionen. Nur im Reparatur- oder Erneuerungsfall werden diese statischen Stützelemente für ein Element der inneren Umschließung oder für mehrere Elemente derselben durch hydraulische oder mechanische Stützelemente ausgetauscht. Dadurch werden zum einen hohe Anfangsinvestitionen vermieden. Zum anderen ist die Gewähr gegeben, daß die nur für den Bedarfsfall eingebrachten hydraulischen oder mechanischen Stützelemente dann auch funktionieren.

Die Betriebssysteme für Beschickung, Entnahme, Lüftung, Raumluftüberwachung sowie Gas- und Sicherwasserfassung und -ableitung können im Kontroll- und Arbeitsraum, die beiden letzteren u.U. auch innerhalb des Innenbehälters, untergebracht sein.

Des weiteren kann vorgesehen sein, daß jeweils mehrere Deponiebehälter gemeinsam mit einem Treppen- und Förderturm eine Gruppe bilden und mehrere Gruppen eine ganze Deponiebehälteranlage.

Das erfindungsgemäße System kann schließlich gemäß Konzept b) auch für vorbehandelte, mineralisierte Abfälle ausgelegt werden. In diesem Fall kommt es darauf an, daß die Schutzmaßnahmen gegen Feuchtigkeitszutritt jederzeit und auf unbegrenzte Dauer kontrollierbar und reparierbar sind.

Beschreibung von Ausführungsbeispielen der Erfindung

Weitere Einzelheiten und Vorteile der Erfindung werden im folgenden unter Bezugnahme auf in den Figuren dargestellte Ausführungsbeispiele erläutert. In den Figuren zeigt:

Fig. 1 in schematischer Darstellungsweise einen Axialschnitt des erfindungsgemäßen Behältersystems,

Fig. 2 einen Schnitt nach II-II in Fig. 3,

Fig. 3 einen Schnitt nach III-III in Fig. 1,

Fig. 4 im schematischen Horizontalschnitt die Darstellung eines Reparaturvorgangs, und

Fig. 5 im Axialschnitt eine vereinfachte Ausführungsform eines erfindungsgemäßen Behältersystems.

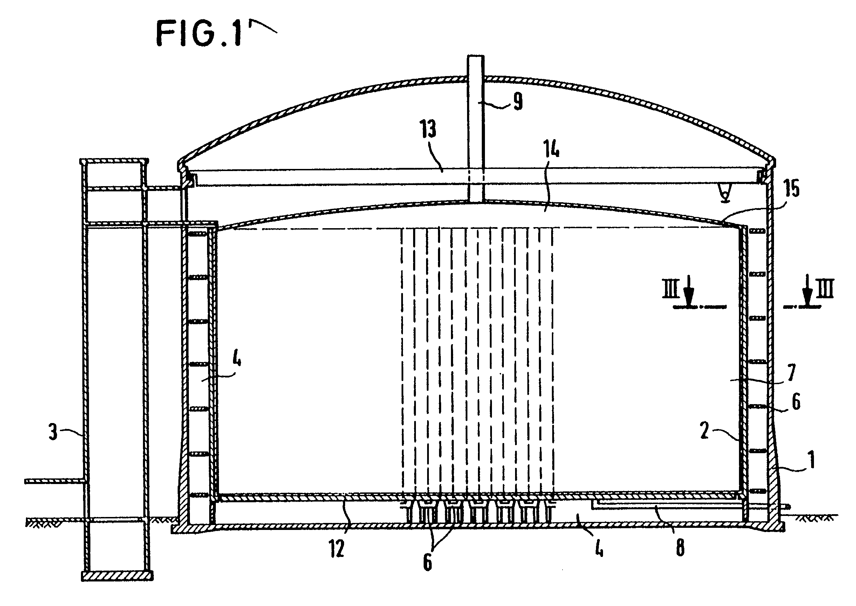

Bei dem Behältersystem für nicht vorbehandelte Abfälle (Fig. 1) handelt es sich um zwei ineinander gestellte Behälter (1, 2).

Der äußere Behälter (1) ist eine monolithisch hergestellte, einschalige Spannbetonkonstruktion, die die Aufgaben hat,

– die äußeren Einwirkungen wie Wind, Niederschlag usw. vom Innenraum fernzuhalten,

– die u.U. möglichen außergewöhnlichen äußeren Angriffe auf das Bauwerk (z.B. durch Erdbeben) zu beherrschen,

– einen Kontroll- und Arbeitsraum (4) nach außen zu begrenzen,

– die vom Innenbehälter (2) über Stützelemente (6) kommenden Lasten aufzunehmen und in die Gründung abzuleiten sowie

– die vom Abfall ausgehenden Umweltbelastungen (u.a. Gase, Geruch) im System einzuschließen.

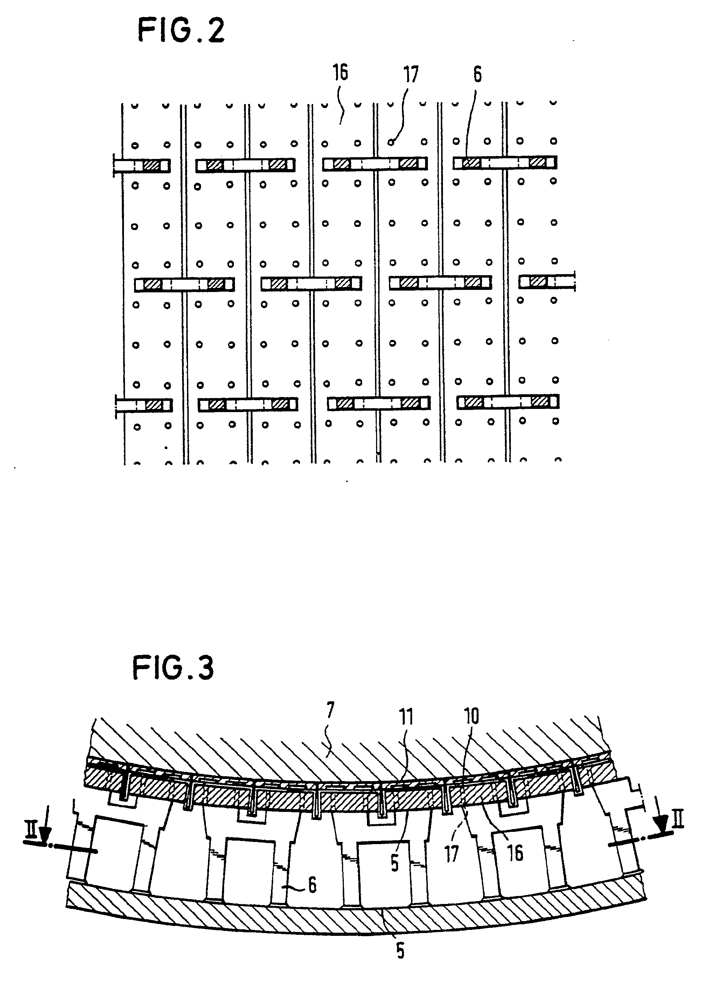

Der Außenbehälter kann auf seiner Innenseite eine betonschützende Beschichtung (5) erhalten (Fig 3), die auch auf alle Betonteile zum Kontroll- und Arbeitsraum (4) hin ausdehnbar ist.

Der Innenbehälter (2) hat die Aufgaben,

– einen Abfallraum (7) mit dem Abfall zu umschließen,

– die vom Abfall ausgehenden chemischen, biologischen, mechanischen Angriffe durch eine Dichtung (10) von den anderen Bauteilen fernzuhalten,

– die Belastungen durch den Abfall lokal zu übernehmen und auf die Stützelemente (6) zu übertragen und

– im Abfall anfallendes Sickerwasser und Deponiegas zu sammeln, einzuschließen sowie durch entsprechende Leitungen (8), (9) abzuführen.

Zu diesen Zwecken hat der Innenbehälter (2) einen mehrschichtigen Aufbau, bestehend aus tragenden Stahlbeton-Wand- und -bodenelementen (16) und (12), die genannte Dichtung oder den Liner bildenden Dichtungsplatten (10) (Auskleidungsschicht) und Filterplatten (11) (Filterschicht) (s. Fig. 2 und 3).

Die Auflösung der tragenden Innenbehälterwand in einzelne, bevorzugt wandhohe Elemente (16) und der -sohle in gleich breite, langgestreckte Elemente (12) ist eine notwendige Maßnahme zur Erfüllung der Anforderung, daß der Innenbehälter unbegrenzt häufig kontrollierbar und reparierbar sein muß. Der Reparaturvorgang wird weiter unten beschrieben.

Der Luftraum bzw. Kontroll- und Arbeitsraum (4) zwischen Innen- und Außenbehälter (1, 2) ist ein wesentlicher Bestandteil des Sicherheitskonzepts dieses Abfallagers. Er enthält die Betriebssysteme. Die Betriebssysteme sind:

– Beschickung
– Entnahme
– Belüftung
– Raumluftüberwachung
– Sickerwasserableitung
– Deponiegasableitung.

Sie werden im einzelnen beschrieben.

Betriebssystem "Beschickung"

Nachdem der in beliebiger Verpackung zugelieferte Abfall auf der Anlage angeliefert wurde, durchläuft er allgemein folgende, hier nicht dargestellte Stationen:

– Registrierung
– Gewichtsermittlung
– Aussortierung verwertbarer Bestandteile
– Analyse des Abfalls
– evtl. Befeuchtung oder Verfestigung durch Mischen mit anderen Abfällen
– evtl. Umfüllen in andere Behältnisse
– Förderung durch einen Beschickungsturm (3) (Fig. 1), der mehrere Behälter einer Gruppe versorgen kann
– Übernahme durch einen Verteilungskran (13) oder dergl. und
– Ablagerung im Abfallraum (7) nach vorgegebenem und registriertem Raster.

Die Verpackung des Abfalls kann z.B. bestehen aus Containern, die in den Abfallraum (7) hinein entleert werden, aus Säcken oder aus Fässern.

Betriebssystem "Entnahme"

Bei weiter fortschreitender technischer Entwicklung kann eine Rückholung der Abfälle zur wirtschaftlichen Nutzung oder Mengenreduktion wünschenswert sein. Die Rückholung erfolgt auf umgekehrtem Weg wie die Beschickung.

Durch das geschlossene System der Anlage treten von der Annahme des Abfalls bis zur Ablagerung und eventuellen Rückholung keine Belastungen der Umwelt infolge von Gasen und Gerüchen sowie Flüssigkeiten auf.

Betriebssystem "Belüftung"

Während Beschickung oder Entnahme von Abfall ist der Kontroll- und Arbeitsraum (4) entsprechend der anfallenden Belastung durch Gasentwicklung künstlich so zu belüften, daß eine Explosionsgefahr auszuschließen ist. Sofern die Anwesenheit von Arbeitskräften bei der Beschickung oder Entnahme erforderlich ist, werden auch diese Aspekte bei der Belüftung miteinbezogen. Abzuleitende Luftmengen durchlaufen eine Reinigung oder Wäsche, bevor der entsprechend den geltenden Vorschriften gereinigte Teil wieder an die Außenluft austritt. Dabei anfallende Rückstände sind u.U. wieder zu deponieren oder zu verbrennen. Die dazu notwendigen Ausrüstungen der Anlage sind hier nicht dargestellt, weil sie außerhalb des Behälters plaziert werden, gehören aber zum Sicherheitskonzept der Anlage.

Betriebssystem "Raumluftüberwachung"

Entsprechend den Meßergebnissen der Raumluftüberwachung erfolgt die Steuerung der Luftzufuhr (Belüftung). Insbesondere nach Abschluß der Befüllung des Innenbehälters (2) und einer dann aufzubringenden gasdichten Oberflächenabdeckung (15) (Fig. 1) dringen bei intakten Dichtungen (10) und (15) keine schädlichen Gase mehr aus dem Innenbehälter in den Kontroll- und Arbeitsraum (4). Es ist denkbar, diesen Raum zu diesem Zeitpunkt zu inertisieren (z.B. mit Stickstoff). In jedem Fall liefert eine Veränderung der Lufzusammensetzung, die durch die Raumluftüberwachung entdeckt wird, einen Hinweis auf eine Leckage im Dichtungssystem (10 und 15), ohne daß sich dadurch regelmäßige visuelle Kontrollen erübrigen würden.

Betriebssystem "Sickerwasserableitung"

Die aufgrund des Fehlens von Niederschlagswasser nur geringen Sickwassermengen werden an Tiefpunkten der durch die Bodenelemente (12) gebildeten Sohle des Innenbehälters (2) durch perforierte Rohre gefaßt, die aus dem gleichen Material wie die Dichtung (10) sind. Das Fließen des Sickerwassers wird ermöglicht und auf Dauer gewährleistet durch Verlegen der Filterplatten (11) gleichen Materials auf der Wand- und Sohlendichtung (10) mit einer ausreichenden Distanz zwischen den Schichten (10) und (11). Das regelmäßige Spülen des Distanzraums ist eine weitere Sicherheitsmaßnahme. An den Behälterwänden reicht u.U. Statt der über den Umfang durchlaufenden Filterplatten (11) eine

Abdeckung der Vertikalfugen der Dichtung (10) mit einem Filterstreifen.

Das so gefaßte Sickerwasser wird in der Leitung (8) zusammengefaßt und der weiteren Behandlung außerhalb des Behälters zugeführt, wo eine Reinigung in der Form stattfindet, daß die gereinigte Flüssigkeit einer normalen Kläranlage oder dem Vorfluter zugeleitet werden kann. Die Rückstände sind thermisch zu behandeln und/oder wieder zu deponieren.

Betriebssystem "Deponiegasableitung"

Während der Beschickung ist der Innenbehälter (2) oben offen. In dieser Zeit entstehendes Gas wird mit den abzuleitenden Luftmengen aus der Belüftungsanlage abgezogen und einer entsprechender Behandlung zugeführt. Nach Abschluß der Beschickung wird auf den Abfall eine gasdurchlässige Filterschicht (14) (Fig 1) aufgebracht, die dann mit der Oberflächenabdeckung (15) gasdicht abgeschlossen wird. An den Hochpunkten dieser Abdeckung wird das sich bildende Deponiegas mittels der Leitung (9) gefaßt und durch den Kontroll- und Arbeitsraum (4) und den Außenbehälter (1) abgeleitet. Die weitere Behandlung des Deponiegases kann die thermische Nutzung oder einfache Verbrennung sein mit anschließender Reinigung der entstehenden Rauchgase.

Reparaturvorgang

Ein weiteres Sicherheitselement neben den zuvor geschilderten Betriebssystemen ist die laufende visuelle Kontrollierbarkeit der Wandung des Innenbehälters (2) vom Kontroll- und Arbeitsraum (4) aus. Dazu sind entsprechende Steigeinrichtungen und Bühnen im Raum (4) installiert. Die Stahlbeton-Elemente (12) und (16) enthalten in einem regelmäßigen Raster Kontrollöffnungen (17), die eine Überprüfung der Dichtheit des Liners (10) ermöglichen, bevor eine nennenswerte Beeinträchtigung des Werkstoffs Stahlbeton eintritt.

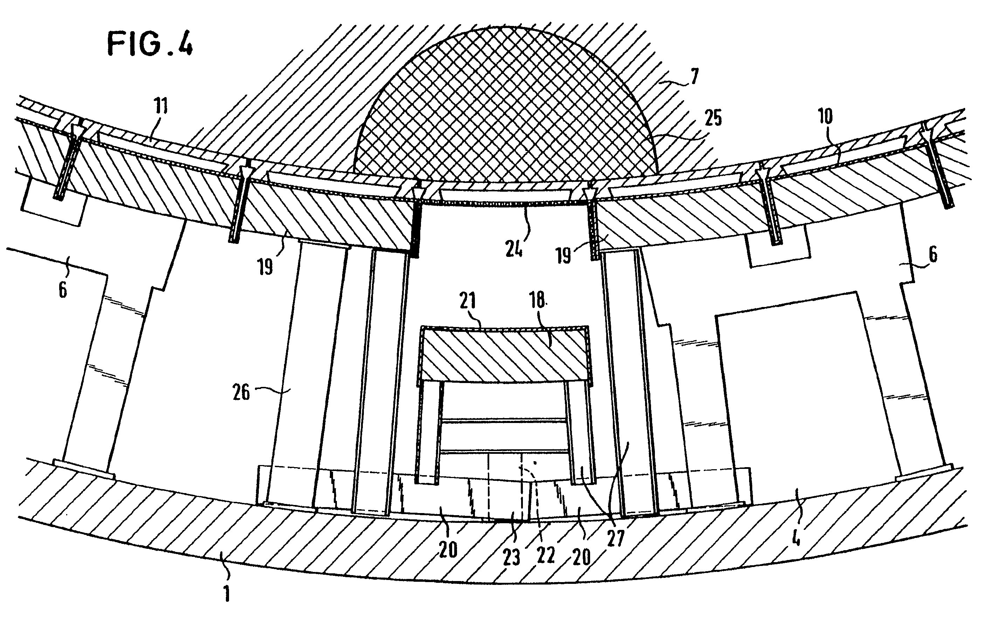

Im Falle eines dabei entdeckten Lecks in dem Liner (10) erfolgt der Reparaturvorgang (Fig 4). In einem ersten Arbeitsgang wird der Abfall in der näheren Umgebung des zu reparierenden Elements (18) so verfestigt, daß er ein Gewölbe (25) zu den benachbarten, nicht zu reparierenden Elementen (19) bildet. Das kann durch Gefrieren oder chemische Injektion geschehen. Sodann wird die in den Kontroll- und Arbeitsraum (4) hineingezogene Dichtungsplatte (10) um das Element (18) herum aufgetrennt. Die betreffenden Abstützrahmen (20) werden an die Außenbehälterwand (1) zurückgeklappt, nachdem zuvor hydraulische Stützelemente (22) zwischen dem Element (18) und der Wand des Außenbehälters (1) eingebaut wurden. Weiterhin werden für die z.T. entfallenden Stützelemente (6) der am Ort verbleibenden Elemente (19) zusätzliche Abstützungen (26) vorgesehen. Durch Einsatz von Hubzügen (23) in Verbindung mit den hydraulischen Stützelementen (22) wird das Element (18) in seine Reparaturposition verfahren, wobei zur Lagesicherung eine Führungskonstruktion (27) aus Stahlprofilen dient.

Diese Beschreibung gilt für ein Wandelement (16 bzw. 18) nach Fig. 4. Die Reparatur eines Bodenelements (12) verläuft nach dem gleichen Prinzip.

Wenn das Element (18) in seine Reparaturposition verfahren ist, wird die eingehende Inspektion zur genauen Abgrenzung des Schadenumfangs vorgenommen.

Verschiedene Größenordnungen des Schadens sind denkbar:
- Die Filterplatten (11) sind schadhaft. Sie können problemlos ausgewechselt werden.
- Der plattenliner (21) hat kleinere Schäden. Aufgrund des üblichen Linermatrials HDPE mit einer hierfür sinnvoll angesehenen Dicke von 5 mm können die schadhaften Stellen herausgetrennt werden und diese durch Einschweißen von einwandfreiem Material ersetzt werden.
- Der Plattenliner (21) hat großflächige Schäden. In diesem Fall wird das Element (18) vollständig mit einem neuen Plattenliner belegt.
- Auch der aufgrund der laufenden Kontrollen eher unwahrscheinliche Fall, daß das Beton-Tragelement (18) in nennenswertem Umfang in Mitleidenschaft gezogen wurde, soll in Betracht gezogen werden. Es bereitet bei dieser Konstruktion keinerlei Schwierigkeiten, das gesamte Element zu zerlegen, aus dem Arbeitsraum zu entfernen und sodann ein neues einschließlich Plattenliner (21) und Kontrollaussparungen (17) herzustellen und einzubauen.

Es ist hervorzuheben, daß alle oben geschilderten Vorgänge in dem geschützten Arbeits- und Kontrollraum (4) erfolgen und die Teile allseits zugänglich sind, so daß jederzeit Qualitätskontrollen durchführbar sind.

Zwischen dem verfestigten Abfallgewölbe (25) bzw. den Filterplatten (11) und dem Arbeits- und Kontrollraum (4) kann erforderlichenfalls eine Trenn- oder Dämmschicht (24) vorübergehend eingebaut werden.

Zu dem Material des Plattenliners (10 bzw. 21) ist noch zu bemerken, daß zwar bevorzugt HDPE mit 5 mm Dicke Anwendung finden soll, aber auch dickere Platten aus HDPE oder der Einsatz des höherresistenten PVDF denkbar sind. An den geschilderten Reparaturmaßnahmen ändert das nichts.

Nach erfolgter Reparatur wird die u.U. eingesetzte Schicht (24) entfernt und das Element (18) in seine Ausgangslage unter Verwendung der hydraulischen Stützelemente (22) zurückgefahren. Sodann werden die ursprünglichen Abstützrahmen (20) wieder in ihre Standardlage zurückgeklappt und die Dichtungsplatten (21) des reparierten Elements (18) mit denen der Nachbarelemente (19) vom Arbeits- und Kontrollraum (4) wieder verschweißt. Mit der Prüfung dieser Schweißnähte ist der Reparturvorgang beendet. Die Hilfsmittel zur provisorischen Abstützung und zum Verfahren der Elemente können ausgebaut oder zu einem anderen reparaturbedürftigen Teil umgesetzt werden. Die Maßnahemen zur Verfestigung des Abfalls können abgeschaltet werden.

Der geschilderte Reparaturvorgang kann gleichzeitig oder nacheinander an mehreren Elementen durchgeführt werden. Dadurch, daß alle Kontrollen und Reparaturen beliebig oft wiederholbar sind und schließlich im Grenzfall der gesamte Innenbehälter (2) auf diese Weise erneuert werden kann, ist das System sicherheitstechnisch hochredundant.

Im Zusammenhang mit den Reparturmöglichkeiten sollen noch einige weitere Hinweise erfolgen. Aufgrund der einfachen Zugänglichkeit bedarf eine Reparatur an der Oberflächenabdeckung (15) keiner besonderen Erläuterung. Das gilt auch für die Leitungen (9) zur Gasfassung. Die in den Behälterboden-Elemente (12) eingelassenen Stutzen zur Sickerwasserfassung können von dem Arbeits- und Kontrollraum (4) herausgewechselt werden, ohne daß die Elemente deswegen verfahren werden müssen. Vielmehr kann über einen eingebauten Wechselflansch der schadhafte Stutzen ausgebaut und ein neuer eingeschoben werden.

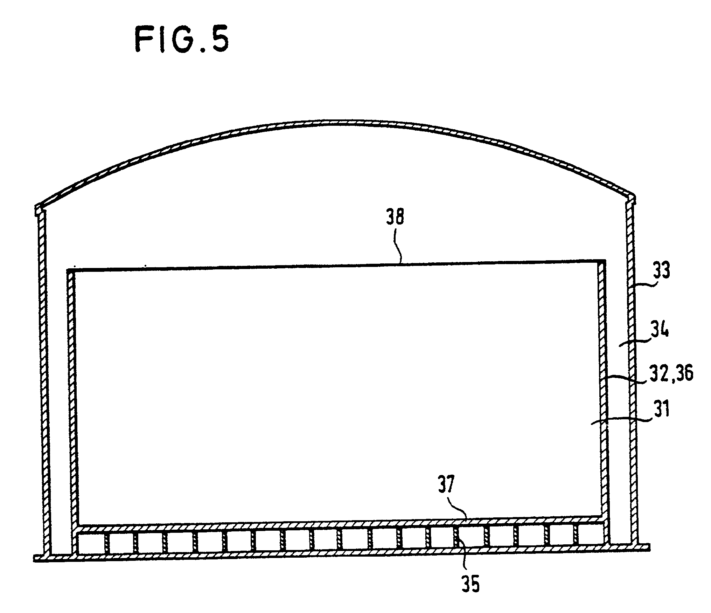

Schließlich zeigt Fig. 5 ein Behältersystem zur Lagerung vorbehandelter Abfälle gemäß Konzept b). Die oben definierten Anforderungen an einen Behälter zur Deponierung derartig vorbehandelter Abfälle führen zwangsläufig zu einer einfacheren Konstruktion, die erfindungsgemäß den Schutz des Abfalls (31) vor Feuchtigkeitszutritt dauerhaft und jederzeit kontrollierbar sicherstellt. Es sei nochmals erwähnt, daß Feuchtigkeistszutritt zum mineralisierten Abfall zum Verlust seiner Immobilität führen würde.

Auch für die Lösung dieser Aufgabe eignet sich wieder der Doppelmantelbehälter, wobei hier beide Behältermäntel (32, 33) monolithisch sind. Der Außenbehälter (33) übernimmt die wesentlichen schützenden Funktionen, indem er die witterungsbedingten Einwirkungen von außen vom Innenraum fernhält und die auf ihn entfallenden Lasten abträgt. Der Innenbehälter (32) weist hauptsächlich tragende Funktionen auf, indem er die Lasten aus dem eingefüllten Abfall vorzugweise durch eine Spannbetonwandkonstruktion (36) und eine auf Ringwänden (35) gestützte Behältersohle (37) aus Stahlbeton abträgt. Aufgrund der vorausgesetzten Immobilität des Abfalls (31) bedarf der Innenbehälter (32) keiner zusätzlichen Dichtungsschicht. Die Beschickung mit dem mineralisierten Abfall (31) erfolgt hier vorzugsweise pneumatisch, kann aber auch auf gleiche Weise wie beim System für nicht vorbehandelte Abfälle stattfinden. Die Rückholung der Abfälle ist gleichermaßen durchführbar.

Der Kontroll- und Arbeitsraum (34), der in diesem Fall keiner Abstützungen zwischen Innen-(36) und Außenwand (33) bedarf, enthält als wesentliches weiteres Betriebssystem eine natürliche Umluftführung zur Aufrechterhaltung einer nach oben begrenzten inneren Luftfeuchte.

Die laufende und jederzeit wiederholbare Inspektion der notwendigen Dichtigkeit des Außenmantels (33) erfolgt mit einem hier nicht dargestellten, am oberen Rand des Innenbehälters verankerten, höhenverstellbaren Besichtigungswagen. Anfallende Reparaturen am Außenbehälter (33) werden konventionell durch Auspressen der Risse mit Kunstharzmörtel durchgeführt. Als zusätzliche Sicherheitsmaßnahme kann die Oberfläche des Abfalls (31) mit einer HDPE-Folie (38) abgedeckt werden.

Auch wenn die vorgestellten Behältersysteme oberirdisch konzipiert sind, was auch technisch zu bevorzugen ist, so muß betont werden, daß auch unterirdische oder teilweise eingeschüttete Bauweisen machbar sind, ohne daß sich dadurch grundsätzlich etwas an dem Gesamtkonzept ändert

## Patentansprüche

1. System zur Lagerung von umweltgefährdenden, nicht wirkungsbezogen differenzierbaren Abfällen, die das System angreifen und zerstören können, bestehend aus einer inneren Umschließung (2) für den Abfall und einem äußeren Mantel (1) als Schutzbehältnis, dadurch **gekennzeichnet**, daß zwischen äußerem Mantel (1) und innerer Umschließung (2) ein Luftraum (4) als Kontroll- und Arbeitsraum ausgebildet ist, die innere Umschließung (2) im Bodenund Wandbereich aus Elementen (12, 16) besteht, die bevorzugt schmal und langgestreckt sind, daß diese Elemente (12, 16) gegen den äußeren Mantel (1) mit Stützelementen (6) abgestützt sind, und daß die Stützelemente (6) gegen hydraulische oder mechanische Stützelemente (22) austauschbar sind, mit deren Hilfe die Elemente (12, 16) einzeln, jedes für sich, in den Kontroll- und Arbeitsraum (4) abgesenkt bzw. gezogen und dort repariert oder erneuert werden können.

2. System nach Anspruch 1, dadurch gekennzeichnet, daß auf der inneren Fläche der Boden- bzw. Wandelemente (12, 16) der inneren Umschließung (2) eine Auskleidungsschicht (10) und eine innen liegende Filterschicht (11) aufgebaut sind.

3. System nach Anspruch 1 oder 2, dadurch gekennzeichnet, daß die Boden- und Wandelemente (12, 16) der inneren Umschließung (2) mit Kontrollöffnungen (17) zur Auskleidungsschicht (10) versehen ist.

4. System nach einem der vorhergehenden Ansprüche, dadurch gekennzeichnet, daß zumindest der Bodenbereich der inneren Umschließung (2) mit einer Einrichtung zur Erfassung und Ableitung von Sickerwasser versehen ist.

5. System nach Anspruch 4, dadurch gekennzeichnet, daß an den Tiefpunkten der durch die Bodenelemente (12) gebildeten Sohle der inneren Umschließung perforierte Rohre zur Erfassung von Sickerwasser angeordnet sind.

6. System nach Anspruch 4 oder 5, dadurch gekennzeichnet, daß in die Bodenelemente (12) der inneren Umschließung Stutzen zur Erfassung von Sickerwasser eingelassen sind, die vom Arbeits- und Kontrollraum (4) her auswechselbar sind.

7. System nach einem der vorhergehenden Ansprüche 3 bis 6, dadurch gekennzeichnet, daß zum Fließen des Sickerwassers die Schichten (10) und (11) der inneren Umschließung mit Distanz angeordnet sind.

8. System nach einem der vorhergehenden Ansprüche, dadurch gekennzeichnet, daß zwischen der Filterschicht (11) der inneren Umschließung (2) und dem Arbeits- und Kontrollraum (4) eine Trenn- und Dämmschicht (24) einbaubar ist.

## Claims

1. A system for storing pollutive wastes which cannot be differentiated in respect of their effects and which can attack and destroy the system, comprising an inner enclosure (2) for the waste and an outer casing (1) which serves as protective container, characterised in that an air space (4) which serves as inspection and working chamber is formed between the outer casing (1) and the inner enclosure (2), and that in the region of the floor and the walls, the inner enclosure (2) is formed by elements (12, 16) which are preferably narrow and elongate, that these elements (12, 16) are supported against the outer casing (1) by support elements (6), and that the support elements (6) can be exchanged for hydraulic or mechanical support elements (22), with the assistance of which the elements (12, 16) can each individually be lowered or drawn into the inspection and working chamber (4), where they can be repaired or renewed.

2. A system as claimed in Claim 1, characterised in that a lining layer (10) and an internal filter layer (11) are constructed on the inner surface of the floor- and wall- elements (12, 16) of the inner enclosure (2).

3. A system as claimed in Claim 1 or 2, characterised in that the floor- and wall- elements (12, 16) of the inner enclosure (2) are provided with inspection openings (17) to the lining layer (10).

4. A system as claimed in one of the preceding claims, characterised in that at least the floor area of the inner enclosure (2) is provided with a device for collecting and discharging percolating water.

5. A system as claimed in Claim 4, characterised in that perforated tubes for the collection of percolating water are arranged at the low points of the floor of the inner enclosure which is formed by the floor elements (12).

6. A system as claimed in Claim 4 or 5, characterised in that connecting pieces which serve to collect percolating water are inlet into the floor elements (12) of the inner enclosure, which connecting pieces can be exchanged from the working and inspection chamber (4).

7. A system as claimed in one of the preceding Claims 3 to 6, characterised in that to allow the percolating water to flow, the layers (10) and (11) of the inner enclosure are spaced from one another.

8. A system as claimed in one of the preceding claims, characterised in that a separating and barrier layer (24) can be fitted between the filter layer (11) of the inner enclosure (2) and the working and inspection chamber (4).

## Revendications

1. Système de stockage de déchets dangereux pour l'environnement, non différenciables quant à leur effet, pouvant attaquer et détruire le système, composé d'une enceinte interne (2), pour les déchets, et d'une enveloppe externe(1), servant de réceptacle protecteur, caractérisé en ce qu'entre l'enveloppe externe (1) et l'enceinte interne (2) est réalisé un espace d'air (4), servant d'espace de contrôle et de travail, l'enceinte interne (2) se composant, dans la zone de sol et de paroi, d'éléments (12,16) qui sont de préférence étroits et allongés, ces éléments (12,16) prenant appui contre l'enveloppe extérieure (1), avec des éléments d'appui (6), et les éléments d'appui (6) étant interchangeables pour des éléments d'appui hydrauliques ou mécaniques (22), à l'aide desquels les éléments (12,16) peuvent être individuellement, chacun pour soi, abaissés, respectivement tirés, dans l'enceinte de contrôle et de travail (4) et y être réparés ou remplacés.

2. Système selon la revendication 1, caractérisé en ce qu'un couche de revêtement (10) et une couche de filtrage (11), placée à l'intérieur, sont construites sur la surface intérieure des éléments de sol, respectivement de paroi (12,16) de l'enceinte intérieure (2).

3. Système selon la revendication 1 ou 2, caractérisé en ce que les éléments de sol et de paroi (12,16) de l'enceinte intérieure (2) sont pourvus d'ouvertures de contrôle (17) débouchant sur la couche de revêtement (10).

4. Système selon l'une des revendications précédentes, caractérisé en ce qu'au moins la zone de sol de l'enceinte intérieure (2) est pourvue d'un dispositif de captage et d'évacuation de l'eau d'égouttage.

5. Système selon la revendication 4, caractérisé en ce que des tubes perforés, pour capter l'eau d'égouttage, sont disposés aux points bas de la sole, formée par les éléments de sol (12), de l'enceinte intérieure.

6. Système selon la revendication 4 ou 5, caractérisé en ce que des tubulures, pour capter l'eau d'égouttage, interchangeables depuis l'enceinte de travail et de contrôle (4), sont insérées dans les éléments de sol (12) de l'enceinte intérieure.

7. Système selon l'une des revendications précédentes 3 à 6, caractérisé en ce que les couches (10) et (11) de l'enceinte intérieure sont disposées à distance, en vue de faire s'écouler l'eau d'égouttage.

8. Système selon l'une des revendications précédentes, caractérisé en ce qu'une couche de séparation et d'isolation (24) est susceptible d'être construite entre la couche de filtrage (11) de l'enceinte intérieure (2) et l'enceinte de travail et de contrôle (4).

FIG.1

EP 0 283 491 B1

## FIG.2

## FIG.3

FIG.4

# FIG.5